# DEMANDE DE BREVET EUROPEEN

(11) **EP 0 898 110 A1**
(43) Date de publication de la demande: **24.02.1999**
(21) Numéro de dépôt: 97450020.9
(22) Date de dépôt: 22.08.1997
(51) Int. Cl.: F16L 37/18, F16L 37/20

(54) **Dispositif de manoeuvre et de verrouillage d'un coupleur femelle et coupleur femelle équipé de ce dispositif**

(71) Demandeur: Perolo S.A., 94251 Gentilly Cedex (FR)
(72) Inventeur: Detcherry, Jean-Albert, 33390 Saint Martin Lacaussade (FR); Putcrabey, Olivier, 33390 Plassac (FR)
(74) Mandataire: Thébault, Jean-Louis

(57) **Abrégé**

- L'objet de l'invention est un dispositif de manoeuvre et de verrouillage d'un coupleur (10) femelle comprenant un corps (12) avec une tête (18) de couplage équipée à travers deux lumières (30) de deux cames (26) pivotantes pouvant prendre deux positions, une première escamotée et une seconde verrouillée, cette tête de couplage étant prévue pour coopérer de façon étanche par interposition d'un joint (42) avec l'extrémité d'un adaptateur (38) mâle comportant une gorge (40) adaptée pour recevoir les cames, caractérisé en ce qu'il comprend une poignée (22) de manoeuvre et de verrouillage prévue pour coopérer avec une articulation (24) à levier reliée à chacune des cames, ladite poignée pouvant prendre deux positions, une première position correspondant à la première position de la came dite escamotée et une seconde position correspondant à la seconde position de la came dite verrouillée.
- L'invention couvre aussi le coupleur femelle équipé de ce dispositif.
- Application plus particulière aux coupleurs dans les transports et transferts de produits pétroliers.

## Description

La présente invention concerne un dispositif de manoeuvre d'un coupleur femelle, plus particulièrement adapté aux conduites de produits pétroliers tels que celles des camions citernes ainsi que le coupleur femelle ainsi équipé.

La suite de la description est faite en regard de coupleurs tels que ceux qui sont montés sur les camions citernes, ce qui facilite les explications mais ne doit pas être considéré comme étant une limitation de la portée de la présente invention.

Les camions citernes assurent les transferts généralement d'un lieu dit dépôt vers des points de distribution par exemple une station service. Le camion citerne est équipé de conduites en relation directe avec les compartiments de stockage, des vannes permettant la fermeture ou l'ouverture de ces conduites.

En fonction des produits ou des quantités, l'opérateur choisit l'un ou l'autre ou plusieurs compartiments, qu'il doit relier par des tuyaux souples aux réservoirs de stockage.

Il faut réaliser cette opération régulièrement et plusieurs fois par jour pour chaque compartiment, ce qui représente un grand nombre de couplages.

Sur la conduite, il est prévu un adaptateur mâle dont les dimensions sont parfaitement standardisées sur lequel il faut monter le coupleur femelle dont les dimensions sont aussi standardisées.

Une soupape est montée sur l'adaptateur mâle qu'il convient de repousser au moment du couplage, c'est à cet effet que le coupleur femelle est muni d'un poussoir qui, au moment du couplage, repousse cette soupape pour permettre la mise en communication.

Le couplage est bien sûr une phase très importante.

Il faut que les coupleurs soient verrouillés et ne puissent en aucun cas s'ouvrir lors de la distribution, ni même fuir.

Le couplage assure aussi la portée de la périphérie de l'extrémité de l'adaptateur mâle sur un joint disposé dans le coupleur femelle, il faut donc assurer une pression suffisante sur ce joint.

Ainsi qu'indiqué ci-avant, il faut aussi vaincre l'effort de rappel de la soupape en fin de course afin de l'ouvrir.

Aussi, les dispositifs de verrouillage connus et imposés comprennent des cames indépendantes et diamétralement opposées, excentrées, disposées sur le coupleur femelle qui sont prévues pour coopérer avec une gorge ménagée dans l'adaptateur mâle.

Ces cames sont manoeuvrées indépendamment l'une de l'autre, chacune par un levier entre une première position escamotée dans laquelle le levier est orienté vers l'avant dans le sens d'introduction du coupleur et une position verrouillée dans laquelle le levier a subi un pivotement sensiblement de 180°, vers l'arrière.

On comprend le problème posé à l'opérateur qui doit à la fois :
- emboîter le coupleur femelle en le poussant tout en le soutenant car il est d'un poids non négligeable surtout qu'il est lié à une conduite souple, et
- actionner l'une des cames puis l'autre en tirant dans le sens opposé de celui de la poussée d'emboîtement.

On note aussi que les efforts à exercer sont relativement importants puisque le couplage doit s'effectuer avec un serrage suffisant et que la longueur des leviers de manoeuvre des cames est nécessairement réduite pour pouvoir décrire un arc de cercle proche de 180° dans un espace minimum.

De plus, un des leviers est d'abord actionné puis l'autre si bien qu'il n'y a aucune symétrie lors de l'action de verrouillage, ce qui est peu satisfaisant.

De plus, on note que les opérateurs ont une forte tendance à se servir des leviers de cames des coupleurs existants en tant que poignées de portage alors qu'elles ne sont pas spécialement conçues pour cette fonction.

La présente invention vise à pallier ces inconvénients et propose un dispositif de manoeuvre et de verrouillage qui permet à l'opérateur de réaliser les différents gestes de couplage de façon aisée, sans efforts inutiles, avec une position ergonomique, un portage dissocié du mouvement de pivotement des cames, un verrouillage symétrique des deux cames avec un bras de levier plus important pour exercer l'effort de verrouillage nécessaire, l'ensemble permettant de respecter parfaitement les normes en vigueur concernant ce type de coupleurs, notamment les contraintes dimensionnelles.

A cet effet, le dispositif de manoeuvre et de verrouillage selon l'invention d'un coupleur femelle comprenant un corps avec une tête de couplage équipée à travers deux lumières, de deux cames pivotantes pouvant prendre deux positions, une première escamotée et une seconde verrouillée, cette tête de couplage étant prévue pour coopérer de façon étanche par interposition d'un joint avec l'extrémité d'un adaptateur mâle comportant une gorge adaptée pour recevoir les cames, se caractérise en ce qu'il comprend une poignée de manoeuvre et de verrouillage prévue pour coopérer avec une articulation à levier reliée à chacune des cames, ladite poignée pouvant prendre deux positions, une première position correspondant à la première position de la came dite escamotée et une seconde position correspondant à la seconde position de la came dite verrouillée.

Selon un mode de réalisation préférentiel, l'articulation comprend une sphère solidaire de l'une des extrémités d'une tige dont l'autre extrémité est solidaire de la came correspondante.

De plus, la sphère est montée libre en rotation sur l'extrémité de la tige selon une autre caractéristique, la poignée de manoeuvre et de verrouillage comprend deux logements prévus pour recevoir chacun l'une des deux sphères associées.

Plus spécifiquement, en regard du mode de réalisation principal, la poignée a une forme en U renversé, les deux extrémités libres étant montées pivotantes par rapport au corps du coupleur femelle, la première position de cette poignée étant vers l'avant et la seconde position étant vers l'arrière.

Selon une autre caractéristique, le joint d'étanchéité est un joint torique.

Le dispositif comprend de plus une poignée de portage disposée à l'arrière du corps du coupleur femelle pour en faciliter la préhension.

La présente invention couvre aussi le coupleur femelle équipé de ce dispositif.

La présente invention est maintenant décrite en regard des dessins annexés qui correspondent à un mode de réalisation particulier non limitatif, les différentes figures représentant :
- figures 1A et 1B, deux vues en élévation latérale, respectivement dans la position avant verrouillage et après verrouillage,
- figures 2A et 2B, les vues en coupe médiane longitudinale faisant apparaître les cames, ceci respectivement dans les deux positions correspondant aux figures 1A et 1B,
- figure 3, une vue en perspective de la came et de l'articulation associée faisant partie des moyens de manoeuvre, et
- figure 4, une vue en coupe partielle transversale faisant apparaître le montage de la came dans la lumière du corps du coupleur.

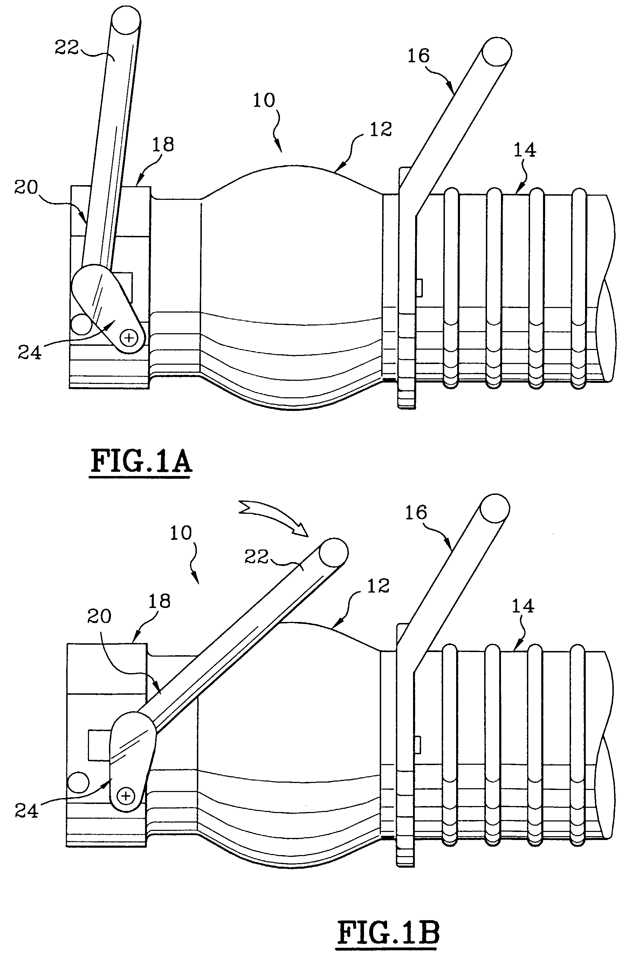

Sur les figures 1A et 1B, on a représenté un coupleur 10 femelle qui comprend un corps 12, relié par son extrémité arrière à un tuyau 14 flexible de type annelé dans ce cas, une poignée 16 de portage disposée sensiblement au droit de la liaison du tuyau et du corps, une tête 18 de couplage et des moyens 20 de manoeuvre et de verrouillage de cette tête sur un adaptateur mâle de type connu.

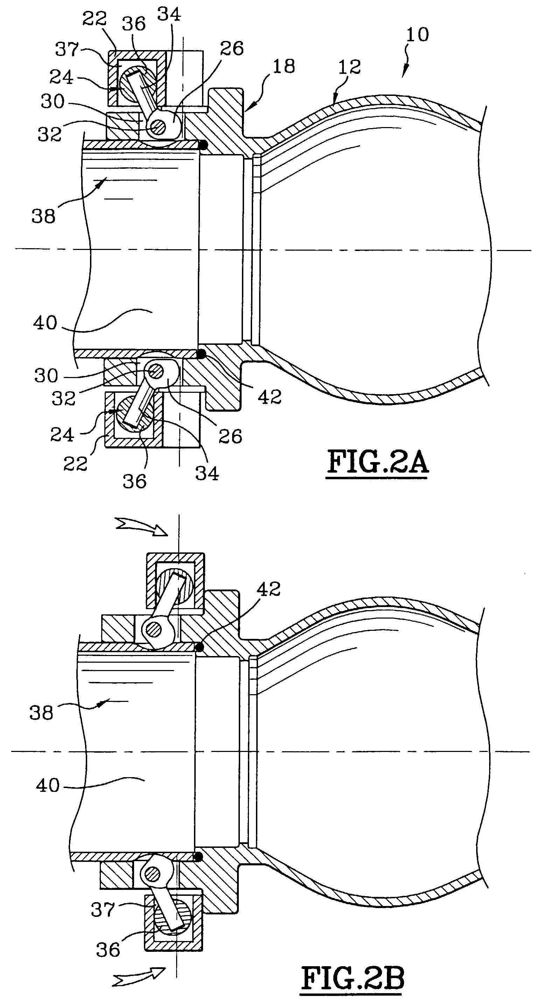

Les moyens 20 de manoeuvre et de verrouillage comprennent une poignée 22 de manoeuvre et de verrouillage, au moins une articulation 24 prévue pour coopérer avec ladite poignée de manoeuvre et de verrouillage d'une part et avec une came 26 d'autre part ainsi que cela est visible sur les figures 2A et 2B.

Les moyens 20 de manoeuvre et de verrouillage peuvent prendre deux positions la première dite ouverte dans laquelle la poignée de manoeuvre et de verrouillage est vers l'avant, figure 1A, et la seconde dite verrouillée dans laquelle la poignée de manoeuvre et de verrouillage est tirée vers l'arrière, figure 1B, suivant la flèche 28.

Le corps 12 du coupleur comprend deux lumières 30, diamétralement opposées, dans chacune desquelles la came 26 correspondante est montée pivotante autour d'un axe 32.

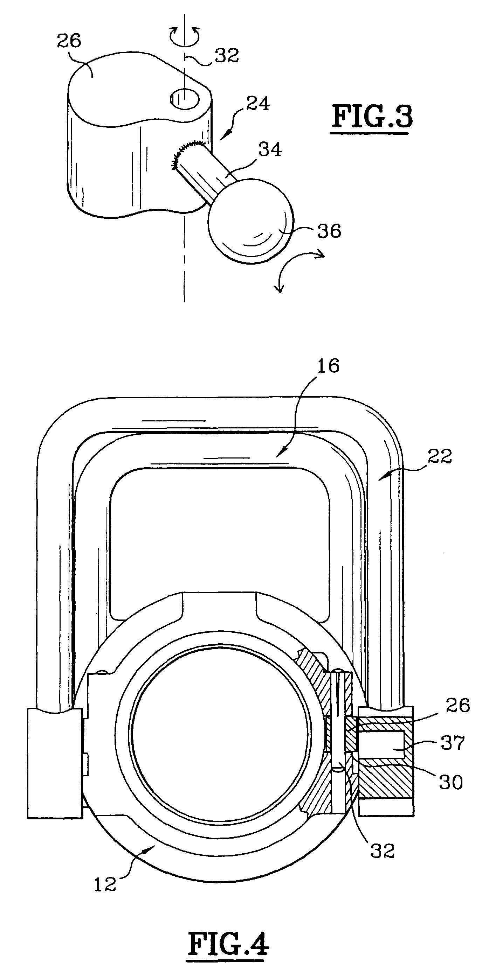

Chaque articulation 24 comprend, ainsi que cela est visible sur les figures 2A et 2B et sur la figure 3, une tige 34 de liaison dont une extrémité est solidaire de la came 26 correspondante et dont l'autre extrémité porte une sphère 36.

Sur la figure 4, les éléments identiques à ceux des autres figures portent les mêmes références.

Plus particulièrement dans le mode de réalisation préférentiel tel que montré, la sphère est montée libre en rotation sur la tige de liaison, ladite sphère comportant à cet effet un trou borgne dans lequel est logée l'extrémité de cette tige. Les matériaux seront choisis pour que la résistance au frottement soit adaptée et des essais ont montré, notamment avec une lubrification simplifiée, que le nombre de cycles pouvait atteindre plusieurs dizaines de milliers sans usure apparente et dans tous les cas avec un serrage du couplage parfaitement suffisant.

Cette sphère est plus particulièrement disposée dans un logement 37 ménagé dans la poignée 22 de manoeuvre et de verrouillage.

A partir des figures 2A et 2B, on appréhende aisément la mise en oeuvre du dispositif de manoeuvre et de verrouillage selon l'invention.

L'opérateur saisit le coupleur femelle par la poignée 16 de portage qui n'est qu'optionnelle ou directement par la poignée 22 de manoeuvre et de verrouillage.

L'opérateur assure le montage et l'emboîtement du coupleur femelle sur un adaptateur 38 mâle, muni d'une gorge 40 dont les dimensions sont parfaitement standardisées. Pour cela l'opérateur peut saisir le coupleur femelle directement derrière la tête 18, ou mieux encore par la poignée 16 de portage lorsque le coupleur femelle en est équipé tandis qu'il soutient de l'autre main ce coupleur femelle. On note que les deux fonctions de portage et d'emboîtement sont dissociées et dévolues à chacune des mains de l'opérateur rendant cette phase très facile et très rapide.

Une fois emboîté, le coupleur femelle se trouve dans la position montrée sur la figure 2A, l'extrémité de l'adaptateur mâle venant en appui sur un joint 42 disposé dans une gorge du coupleur femelle. Dans ce mode de réalisation préférentiel, le joint est de type torique si bien que l'effort à exercer est également plus faible pour une pression d'étanchéité identique.

Pour le verrouillage, l'opérateur, tout en assurant d'une main le maintien du coupleur femelle emboîté, tire sur la poignée 22 de manoeuvre et de verrouillage, ce qui provoque le pivotement de la came 26 dont la partie renflée vient coopérer avec la gorge 40 de l'adaptateur mâle, prévue pour la recevoir.

Le verrouillage permet de maintenir les deux coupleurs emboîtés mais en même temps assure un serrage supplémentaire par effet de levier, ce qui permet un très léger déplacement relatif des coupleurs l'une vers l'autre générant la pression d'étanchéité nécessaire avec le joint torique.

Pendant le mouvement de la poignée, on constate que la sphère est entraînée dans son logement 37 et agit par l'intermédiaire de la tige 34 comme avec un levier.

Le mouvement décrit impose nécessairement des frottements entre la sphère et les parois du logement dans laquelle elle est emprisonnée. Il y a en effet un déplacement curviligne du logement combiné à un déplacement curviligne du levier dans un plan sensiblement perpendiculaire et à une variation faible mais réelle de longueur.

Aussi une solution consiste à utiliser des matériaux antifriction mais un moyen simple selon le présent mode de réalisation est en outre de rendre la sphère mobile par rapport à la tige qui la supporte ainsi que décrit ci-avant.

La position de la poignée de manoeuvre et de verrouillage et son débattement sont tels que dans la seconde position dite verrouillée ladite poignée est stable et il est impossible par une traction exercée sur le coupleur femelle ou par un choc de provoquer le découplage.

Sur la vue de face de la figure 4, on peut remarquer la poignée 16 de portage, qui peut prendre toute forme ergonomique et notamment cette poignée en U renversé peut avantageusement être remplacée par une poignée filiforme ouverte disposée dans le plan longitudinal médian.

## Revendications

1. Dispositif de manoeuvre et de verrouillage d'un coupleur (10) femelle comprenant un corps (12) avec une tête (18) de couplage équipée à travers deux lumières (30) de deux cames (26) pivotantes pouvant prendre deux positions, une première escamotée et une seconde verrouillée, cette tête de couplage étant prévue pour coopérer de façon étanche par interposition d'un joint (42) avec l'extrémité d'un adaptateur (38) mâle comportant une gorge (40) adaptée pour recevoir les cames, caractérisé en ce qu'il comprend des moyens (20) de manoeuvre et de verrouillage des cames avec une articulation (24) à levier reliée à chacune des cames, lesdits moyens pouvant prendre deux positions, une première position correspondant à la première position de la came dite escamotée et une seconde position correspondant à la seconde position de la came dite verrouillée.

2. Dispositif selon la revendication 1, caractérisé en ce que les moyens (20) de manoeuvre et de verrouillage comprennent une poignée (22) de manoeuvre et de verrouillage prévue pour coopérer avec l'articulation (24) à lever, cette poignée étant articulée par rapport au corps (12) du coupleur (10).

3. Dispositif selon la revendication 1 ou 2, caractérisé en ce que l'articulation comprend une sphère (36) solidaire de l'une des extrémités d'une tige (34) dont l'autre extrémité est solidaire de la came (26) correspondante.

4. Dispositif selon la revendication 3, caractérisé en ce que la sphère (36) est montée libre en rotation sur l'extrémité de la tige (34).

5. Dispositif selon la revendication 3 ou 4, caractérisé en ce que la poignée (22) de manoeuvre et de verrouillage comprend deux logements (37) prévus pour recevoir chacun l'une des deux sphères (36) associées.

6. Dispositif selon l'une quelconque des revendications précédentes, caractérisé en ce que la poignée (22) a une forme en U renversé, les deux extrémités libres étant montées pivotantes par rapport au corps (12) du coupleur (10) femelle, la première position de cette poignée étant vers l'avant et la seconde position étant vers l'arrière.

7. Dispositif selon l'une quelconque des revendications précédentes, caractérisé en ce que le joint (42) d'étanchéité est un joint torique.

8. Dispositif selon l'une quelconque des revendications précédentes, caractérisé en ce qu'il comprend une poignée (16) de portage disposée à l'arrière du corps (12) du coupleur (10) femelle pour en faciliter la préhension.

9. Coupleur femelle notamment pour les conduites de chargement et déchargement de produits pétrolier équipé du dispositif selon l'une quelconque des revendications précédentes.
